# EUROPÄISCHE PATENTANMELDUNG

(11) **EP 1 923 726 A2**
(43) Veröffentlichungstag der Anmeldung: **21.05.2008**
(21) Anmeldenummer: 07020370.8
(22) Anmeldetag: 18.10.2007
(51) Int. Cl.: G01V 8/20

(54) **Optischer Sensor**

(30) Priorität: 14.11.2006 DE 102006053546
(71) Anmelder: Leuze lumiflex GmbH + Co. KG, 82256 Fürstenfeldbruck (DE)
(72) Erfinder: Lohmann, Lutz, Dr., 82140 Olching (DE); Brunner, Rolf, 82223 Eichenau (DE)
(74) Vertreter: Ruckh, Rainer Gerhard

(57) **Zusammenfassung**

Die Erfindung betrifft einen optischen Sensor der zur Erfassung von Objekten in einem Überwachungsbereich,+ mit einem Sendelichtstrahlen (6) emittierenden Sender (7) und einem Empfangslichtstrahlen empfangenden Empfänger (9) dient. In einer Auswerteeinheit (10) erfolgt eine fehlersichere Auswertung der Empfangssignale des Empfängers (9) zur Generierung von Sicherheitsdaten bildenden Objektfeststellungssignalen. Zur Übermittlung von Daten ist eine Funkverbindung vorgesehen.

## Beschreibung

Die Erfindung betrifft einen optischen Sensor gemäß dem Oberbegriff des Anspruchs 1.

Derartige optische Sensoren werden im Bereich der Sicherheitstechnik und des Personenschutzes eingesetzt. Typischerweise wird mit diesen optischen Sensoren ein Gefahrenbereich an einer Maschine oder Anlage überwacht. Wird mittels des optischen Sensors ein Eindringen eines Objektes oder einer Person in den Gefahrenbereich registriert, wird in der Auswerteeinheit des optischen Sensors ein entsprechendes Objektfeststellungssignal generiert, welches an die Steuerung der Maschine oder Anlage ausgegeben wird, so dass die Maschine oder Anlage abgeschaltet wird, damit von dieser keine Gefährdung für Personen mehr ausgehen kann. Andererseits wird für den Fall, das kein Eingriff im Gefahrenbereich vorliegt, ein entsprechender Signalzustand des Objektfeststellungssignals im optischen Sensor generiert, so dass dann der Betrieb der Maschine oder Anlage durch den optischen Sensor freigegeben wird.

Bekannte optische Sensoren dieser Art weisen eine Steckerverbindung auf, mittels derer der optische Sensor mit der Steuerung der Maschine oder Anlage über Kabelverbindungen verbunden wird. Über diese Kabelverbindung erfolgt die Ausgabe des Objektfeststellungssignals. Weiterhin können über die Kabelverbindung Konfigurationsdaten und/oder Diagnosedaten übertragen werden, die zur Wartung und/oder Parametrierung des optischen Sensors verwendet werden.

Eine Installation derartiger Kabelverbindungen gestaltet sich insbesondere dann zeitaufwendig, wenn der optische Sensor an unzugänglichen Einbauorten an der Anlage oder Maschine installiert werden muss.

Weiterhin ist nachteilig, dass zur Wartung und/oder Konfiguration von optischen Sensoren typischerweise Service-Stecker verwendet werden. Über diese Service-Stecker muss das Bedienpersonal Rechnereinheiten oder dergleichen anschließen, um die jeweiligen Wartungsarbeiten durchführen zu können.

Bei an schwer zugänglichen Stellen montierten optischen Sensoren gestaltet sich diese Art der Sensorwartung äußerst umständlich und zeitaufwendig.

Der Erfindung liegt die Aufgabe zugrunde einen optischen Sensor der eingangs genannten Art bereitzustellen, welcher mit geringem Aufwand installiert und gewartet werden kann.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten in einem Überwachungsbereich und umfasst einen Sendelichtstrahlen emittierenden Sender und einen Empfangslichtstrahlen empfangenden Empfänger. In einer Auswerteeinheit erfolgt eine fehlersichere Auswertung der Empfangssignale des Empfängers zur Generierung von Sicherheitsdaten bildenden Objektfeststellungssignalen. Zur Übermittlung von Daten ist eine Funkverbindung vorgesehen.

Durch die im optischen Sensor integrierte Funkverbindung kann dieser ohne Verkabelung an zu überwachenden Maschinen oder Anlagen installiert werden. Damit kann der optische Sensor schnell und einfach installiert werden, wobei besonders vorteilhaft ist, dass der optische Sensor auch an engen, schwer zugänglichen Einbauorten installierbar ist.

Mit dem optischen Sensor können sowohl Sicherheitsdaten als auch nicht sicherheitsrelevante Daten übertragen werden. Zu den Sicherheitsdaten gehört insbesondere das Objektfeststellungssignal, dessen Signalzustände angeben, ob sich ein Objekt in dem zu überwachenden Überwachungsbereich befindet oder nicht.

Bei einem Einsatz des optischen Sensors im Bereich des Personenschutzes wird mit dem optischen Sensor typischerweise ein Gefahrenbereich einer Maschine oder Anlage überwacht. Wird mit dem optischen Sensor ein Objekteingriff im Gefahrenbereich registriert, wird durch das hierbei im optischen Sensor generierte Objektfeststellungssignal die jeweilige Maschine oder Anlage zur Vermeidung von Gefahren von Personen oder Objekten abgeschaltet. Um das für den Einsatz im Personenschutz erforderliche Sicherheitsniveau zu erzielen, erfolgt in der Auswerteeinheit eine fehlersichere Auswertung der Empfangssignale des oder der Empfänger und eine entsprechend sichere Generierung des Objektfeststellungssignals. Weiterhin erfolgt über die Funkverbindung auch eine sichere Übertragung des Objektfeststellungssignals an die jeweilige externe Einheit. Diese sichere Datenübertragung wird dadurch erzielt, dass die Übertragung der Daten durch Sicherheitsprotokolle abgesichert wird. Durch die sichere Generierung und Übertragung des Objektfeststellungssignal s kann dieses in einer Steuerung der jeweiligen Maschine oder Anlage mit dem geforderten Sicherheitsniveau genutzt werden.

Ein weiterer wesentlicher Vorteil der Erfindung besteht darin, dass über die Funkverbindung Konfigurationsdaten und/oder Diagnosedaten in eine Speichereinheit des optischen Sensors einlesbar und aus diesem auslesbar sind. Je nach gefordertem Sicherheitsniveau kann dabei eine sichere oder nicht sichere Übertragung dieser Daten über die Funkverbindung erfolgen.

Die so ausgebildete Speichereinheit bildet einen funkgesteuerten Speicher, in welchen zur Parametrierung, das heißt Konfiguration des optischen Sensors und auch zu dessen Wartung ohne den Einsatz von Service-Steckern Daten einbeziehungsweise ausgelesen werden können. Die funkgesteuerte Speichereinheit kann weiterhin besonders vorteilhaft zum Tausch von optischen Sensoren verwendet werden. Fällt beispielsweise ein optischer Sensor an einem Einsatzort aus, so können die in dessen Speichereinheit abgespeicherten applikationsspezifischen Daten über die Funkverbindung in eine externe Einheit ausgelesen werden. Wird dann der defekte optische Sensor durch einen neuen optischen Sensor ersetzt, so können von der externen Einheit die applikationsspezifischen Daten des alten optischen Sensors in dem neuen optischen Sensor übernommen werden, so dass dieser sofort und ohne weitere Einstellvorgänge am Einsatzort einsatzfähig ist.

Der erfindungsgemäße optische Sensor kann gemäß einer ersten Ausfiihrungsform als Lichtgitter ausgebildet sein. Alternativ können der Sender und der Empfänger des optischen Sensors einen Distanzsensor bilden, wobei zur Durchführung der Distanzmessungen vorteilhaft ein Lichtlaufzeitverfahren eingesetzt werden kann, insbesondere ein Phasenmessverfahren oder ein Puls-Laufzeit-Verfahren. Besonders vorteilhaft ist ein derartiger optischer Sensor als Flächendistanzsensor ausgebildet. Die vom Sender emittierten Sendelichtstrahlen werden dann periodisch innerhalb eines flächigen Überwachungsbereichs geführt. Durch die mit dem Distanzsensor des optischen Sensors durchgeführten Distanzmessungen sowie die zusätzliche Bestimmung der aktuellen Ablenkrichtung der Sendelichtstrahlen kann die Position eines Objektes im Überwachungsbereich bestimmt werden. Durch eine geeignete Schwellwertbewertung der ermittelten Distanzwerte kann als Objektfeststellungssignal ein binäres Schaltsignal abgeleitet werden, dessen Schaltzustände angeben, ob sich ein Objekt innerhalb eines vorgegebenen Schutzfelds befindet oder nicht. Die die Geometrien von Schutzfeldern definierenden Konfigurationsdaten können in der Speichereinheit hinterlegt werden.

Die Erfindung wird im Nachstehenden anhand der Zeichnung erläutert. Es zeigt:
- Figur 1:: Schematische Darstellung eines Lichtgitters.
- Figur 2:: Schematische Darstellung einer Funkverbindung des Lichtgitters gemäß Figur 1 zu einer externen Einheit.

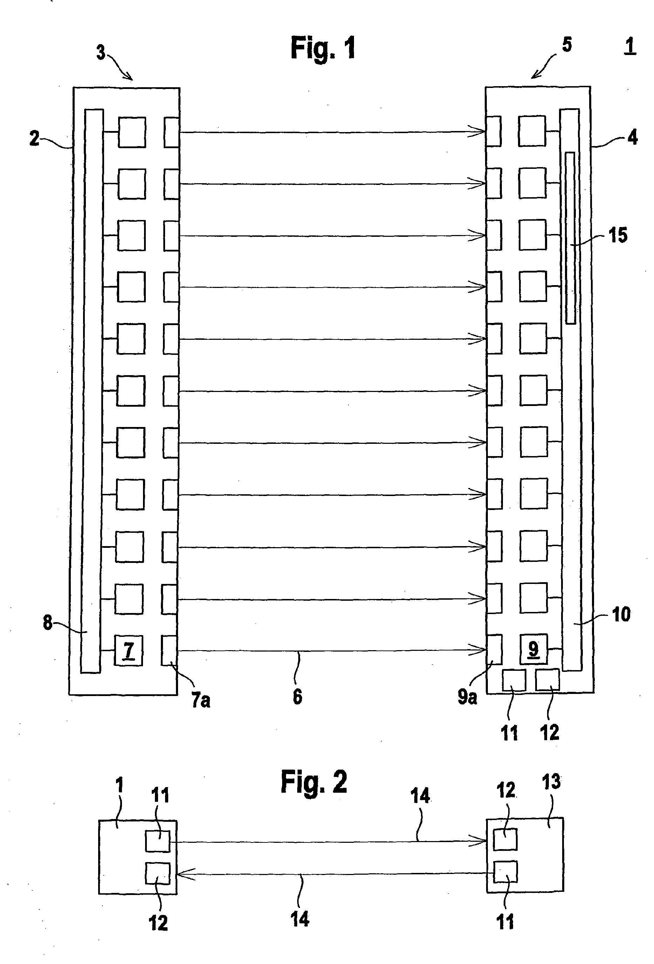

Figur 1 zeigt den Aufbau eines optischen Sensors in Form eines Lichtgitters 1 zur Überwachung eines Überwachungsbereichs. Das Lichtgitter 1 weist eine in einem ersten Gehäuse 2 integrierte Sendereinheit 3 und eine in einem zweiten Gehäuse 4 integrierte Empfängereinheit 5 auf.

Die Sendereinheit 3 weist eine Anordnung von Sendelichtstrahlen 6 emittierenden Sendern 7 auf Die Sender 7 bestehen vorzugsweise aus identisch ausgebildeten Leuchtdioden und sind in Abstand nebeneinander liegend angeordnet. Die Sender 7 werden von einer Sender-Steuereinheit 8 angesteuert. Im vorliegenden Ausführungsbeispiel werden die Sender 7 im Pulsbetrieb betrieben. Die Sender 7 emittieren somit Sendelichtimpulse mit einem vorgegebenen Puls-Pausen-Verhältnis. Vorzugsweise emittieren die einzelnen Sender 7 zyklisch nacheinander Sendelichtimpulse, wobei die Taktung über die Sender-Steuereinheit 8 erfolgt.

Zur Strahlformung der Sendelichtstrahlen 6 ist jedem Sender 7 eine Sendeoptik 7a vorgeordnet. Die Sendeoptiken 7a sind im Bereich der Frontwand des Gehäuses 2 hinter einem nicht separat dargestellten Austrittsfenster angeordnet.

Die Empfängereinheit 5 weist eine Anordnung von identisch ausgebildeten, nebeneinander liegend angeordneten Empfängern 9 auf. Die Empfänger 9 bestehen vorzugsweise jeweils aus einer Fotodiode und sind äquidistant angeordnet. Jedem Empfänger 9 ist eine Empfangsoptik 9a vorgeordnet. Dabei liegt jeweils ein Empfänger 9 einem Sender 7 der Sendereinheit 3 gegenüber, so dass bei freiem Strahlengang die Sendelichtstrahlen 6 eines Senders 7 als Empfangslichtstrahlen auf den gegenüberliegend angeordneten Empfänger 9 treffen.

Die am Ausgang 11 der Empfänger 9 anstehenden Empfangssignale werden in einer zentralen Auswerteeinheit 10 ausgewertet. Die Auswerteeinheit 10 bildet zugleich eine Empfängersteuereinheit zur Steuerung des Betriebs der Empfänger 9.

Jeder Sendelichtstrahlen 6 emittierende Sender 7 bildet mit dem jeweils zugeordneten, gegenüberliegenden Empfänger 9 eine Strahlachse des Lichtgitters 1.

Durch eine optische Synchronisation, die insbesondere anhand einer spezifischen Kennung der von einem ausgewählten Sender 7 emittierten Sendelichtimpulse erfolgt, werden die Sender 7 und die Empfänger 9 der einzelnen Strahlachsen einzeln nacheinander zyklisch aktiviert.

Zur Objektdetektion werden in der Auswerteeinheit 10 die Empfangssignale mit einem Schwellwert bewertet. Liegt der Pegel der Empfangssignale eines Empfängers 9 oberhalb des Schwellwerts, liegt eine einem freien Strahlengang der Sendelichtstrahlen 6 entsprechende nicht unterbrochene Strahlachse vor. Liegt der Pegel der Empfangssignale des Empfängers 9 unterhalb des Schwellwerts liegt eine einem Objekteingriff entsprechende unterbrochene Strahlachse vor.

In der zweikanalig ausgebildeten Auswerteeinheit 10, die aus zwei sich gegenseitig überwachenden Prozessoren besteht, werden die Empfangssignale an den Ausgängen der Empfänger 9 fehlersicher ausgewertet, um festzustellen ob die jeweilige Strahlachse unterbrochen ist oder nicht. In Abhängigkeit davon wird ein Objektfeststellungssignal generiert, welches im vorliegenden Fall als binäres Schaltsignal ausgebildet ist. Die Schaltzustände des binären Schaltsignals geben an, ob sich ein Objekt im Überwachungsbereich befindet oder nicht.

Die Objektfeststellungssignale werden an eine Steuerung ausgegeben, welche eine Maschine steuert. Mit dem Lichtgitter 1 wird ein Gefahrenbereich an der Maschine überwacht. Abhängig von Signalzuständen der Objektfeststellungssignale wird die Maschine über die Steuerung in Betrieb gesetzt oder abgeschaltet. Im vorliegenden Fall wird die Maschine abgeschaltet, wenn der Schaltzustand des binären Schaltsignals einer Objektdetektion im Gefahrenbereich entspricht.

Zur Ausgabe des Objektfeststellungssignals ist eine Funkverbindung vorgesehen. Weiterhin erfolgt die Ein- und Ausgabe sämtlicher Daten über diese Funkverbindung. Zur Ausbildung dieser Funkverbindung sind in dem Lichtgitter 1 ein Funksender 11 und ein Funkempfänger 12 integriert.

Wie in Figur 2 schematisch dargestellt, ist in einer externen Einheit 13 mit welcher ein Datenaustausch erfolgt, ebenso ein Funksender 11 und ein Funkempfänger 12 integriert. Auf diese Weise können, wie in Figur 2 weiter dargestellt, bidirektional Funksignale 14 zwischen dem Lichtgitter 1 und der externen Einheit ausgetauscht werden. Die Übertragung der Funksignale 14 kann insbesondere nach bekannten Funkstandards wie WLAN oder Blue Tooth erfolgen.

Die externe Einheit ist im vorliegenden Fall von der Steuerung der Maschine gebildet. Generell erfolgt vorteilhaft die Datenübertragung zwischen Lichtgitter 1 und externer Einheit 13 nach dem Master-Slave-Prinzip. Dabei bildet die externe Einheit 13 den Master und das Lichtgitter 1 einen Slave. Generell können auf diese Weise auch mehrere Lichtgitter 1 als Slaves mit einer externen Einheit 13 als Master kommunizieren.

Über die Funkverbindung können sowohl Sicherheitsdaten als auch nicht sicherheitsrelevante Daten übertragen werden. Die vom Lichtgitter 1 an die Steuerung übertragene Objektfeststellungssignale bilden Sicherheitsdaten. Derartige Sicherheitsdaten werden durch eine sichere Datenübertragung über die Funkverbindung übertragen. Zur Gewährleistung einer solchen sicheren Datenübertragung werden die zu übertragenden Sicherheitsdaten durch Sicherheitsprotokolle abgesichert. Beispiele hierfür sind Prüfsummen wie zum Beispiel CRC-Prüfsummen.

Weiterhin können als Sicherheitsdaten oder bevorzugt auch als nicht sicherheitsrelevante Daten Konfigurationsdaten und/oder Diagnosedaten über die Funkverbindung übertragen werden. Diese Konfigurationsdaten und/oder Diagnosedaten können in einer Speichereinheit 15 abgespeichert werden, die Bestandteil der Auswerteeinheit 10 ist. Die Konfigurationsdaten können generell Parameterwerte und applikationsspezifische Einstellwerte des Lichtgitters 1 sein. Beispiele hierfür sind die Auflösung des Lichtgitters 1, die definiert, wieviele benachbarte Strahlachsen der Lichtgitter 1 unterbrochen sein müssen, um eine Objektmeldung zu generieren. Weiterhin können durch die Vorgabe von Konfigurationsdaten applikationsspezifische Blanking- oder Muting-Funktionen definiert werden. Bei derartigen Funktionen können zeitabhängig oder abhängig von externen Sensorsignalen bestimmte Bereiche der Strahlachsen überbrückt werden, so dass Unterbrechungen an diesen Strahlachsen nicht zur Generierung einer Objektmeldung führen.

Durch Einlesen von Konfigurationsdaten über die Funkverbindung ist eine drahtlose Parametrierung des Lichtgitters 1 möglich. Weiterhin kann durch Auslesen der Diagnosedaten und gegebenenfalls Konfigurationsdaten aus der Speichereinheit das Lichtgitter 1 mittels einer drahtlosen Datenübertragung gewartet werden.

Schließlich bildet die Speichereinheit 15 einen funkgesteuerten Speicher, der bei einem Austausch von Lichtgittern 1 genutzt werden kann. So werden die im Lichtgitter 1 abgespeicherten applikationsspezifischen Daten, insbesondere Konfigurationsdaten über die Funkverbindung in die externe Einheit 13 ausgelesen. Fällt das Lichtgitter 1 aus und muss durch ein neues ersetzt werden, so können in das neue Lichtgitter 1 von der externen Einheit 13 die applikationsspezifischen Daten des alten Lichtgitters 1 über die Funkverbindung in dieses eingelesen werden. Damit ist das neue Lichtgitter 1 ohne weitere Einstellvorgänge voll funktionsfähig.

### Bezugszeichenliste

- (1): Lichtgitter
- (2): Gehäuse
- (3): Sendereinheit
- (4): Gehäuse
- (5): Empfängereinheit
- (6): Sendelichtstrahlen
- (7): Sender
- (7a): Sendeoptik
- (8): Sender-Steuereinheit
- (9): Empfänger
- (9a): Empfangsoptik
- (10): Auswerteeinheit
- (11): Funksender
- (12): Funkempfänger
- (13): externe Einheit
- (14): Funksignale
- (15): Speichereinheit

## Patentansprüche

1. Optischer Sensor zur Erfassung von Objekten in einem Überwachungsbereich mit wenigstens einem Sendelichtstrahlen emittierenden Sender, wenigstens einem Empfangslichtstrahlen empfangenden Empfänger, sowie einer Auswerteeinheit, in welcher eine fehlersichere Auswertung der Empfangssignale des Empfängers zur Generierung von Sicherheitsdaten bildenden Objektfeststellungssignalen erfolgt, **dadurch gekennzeichnet, dass** zur Übermittlung von Daten eine Funkverbindung vorgesehen ist.

2. Optischer Sensor nach Anspruch 1, **dadurch gekennzeichnet, dass** dieser zur Ausbildung der Funkverbindung einen Funksender (11) und einen Funkempfänger (12) aufweist.

3. Optischer Sensor nach Anspruch 2, **dadurch gekennzeichnet, dass** über die Funkverbindung eine Datenübertragung zu einer Steuereinheit erfolgt, welche ebenfalls einen Funksender (11) und einen Funkempfänger (12) aufweist.

4. Optischer Sensor nach Anspruch 3, **dadurch gekennzeichnet, dass** dieser bei einer nach dem Master-Slave Prinzip erfolgenden Datenübertragung einen Slave bildet.

5. Optischer Sensor nach Anspruch 4, **dadurch gekennzeichnet, dass** die Steuereinheit einen Master bildet.

6. Optischer Sensor nach einem der Ansprüche 1 bis 5, **dadurch gekennzeichnet, dass** Sicherheitsdaten über die Funkverbindung mittels einer sicheren Datenübertragung übertragen werden.

7. Optischer Sensor nach Anspruch 6, **dadurch gekennzeichnet, dass** zur Gewährleistung einer sicheren Datenübertragung die Sicherheitsdaten durch Sicherheitsprotokolle abgesichert sind.

8. Optischer Sensor nach Anspruch 7, **dadurch gekennzeichnet, dass** als Sicherheitsprotokolle Prüfsummen vorgesehen sind.

9. Optischer Sensor nach einem der Ansprüche 1 bis 8, **dadurch gekennzeichnet, dass** über die Funkverbindung Konfigurationsdaten und/oder Diagnosedaten übertragbar sind.

10. Optischer Sensor nach Anspruch 9, **dadurch gekennzeichnet, dass** die Konfigurationsdaten und/oder Diagnosedaten mittels einer nicht sicheren Datenübertragung übertragbar sind.

11. Optischer Sensor nach einem der Ansprüche 8 oder 9, **dadurch gekennzeichnet, dass** dieser zur Speicherung von Konfigurationsdaten und/oder Diagnosedaten eine Speichereinheit (15) aufweist.

12. Optischer Sensor nach Anspruch 11, **dadurch gekennzeichnet, dass** die Speichereinheit (15) zum Ein- und Auslesen von Daten über die Funkverbindung steuerbar ist.

13. Optischer Sensor nach Anspruch 12, **dadurch gekennzeichnet, dass** Daten der Speichereinheit (15) über die Funkverbindung zur Durchführung eines Sensortauschs in die Steuereinheit einlesbar sind.

14. Optischer Sensor nach einem der Ansprüche 1 bis 13, **dadurch gekennzeichnet, dass** dieser ein Lichtgitter (1) ist.

15. Optischer Sensor nach einem der Ansprüche 1 bis 13, **dadurch gekennzeichnet, dass** der Sender und der Empfänger einen Distanzsensor bilden.

16. Optischer Sensor nach Anspruch 15, **dadurch gekennzeichnet, dass** dieser eine Ablenkeinheit aufweist, mittels derer die Sendelichtstrahlen des Senders periodisch innerhalb des Überwachungsbereichs geführt werden.
